(19) Europäisches Patentamt
European Patent Office
Office européen des brevets

(11) **EP 2 778 467 B1**

(12) **EUROPEAN PATENT SPECIFICATION**

(45) Date of publication and mention
of the grant of the patent:
**01.01.2020 Bulletin 2020/01**

(51) Int Cl.:
*F16F 15/22* *(2006.01)*     *B60K 17/22* *(2006.01)*
*F16F 15/12* *(2006.01)*     *F16F 15/31* *(2006.01)*

(21) Application number: **14159802.9**

(22) Date of filing: **14.03.2014**

(54) **Engine torque spike cancellation device**

Vorrichtung zur Unterdrückung der Motordrehmomentspitzen

Dispositif de suppression de pointes de couple moteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2013 US 201361787319 P**

(43) Date of publication of application:
**17.09.2014 Bulletin 2014/38**

(73) Proprietor: **Dana Heavy Vehicle Systems Group,
LLC
Maumee, OH 43537 (US)**

(72) Inventors:
• **Ziech, James F.**
  **Kalamazoo, MI Michigan 49008 (US)**
• **Remboski, Donald J.**
  **Ann Arbor, MI Michigan 48105 (US)**

(74) Representative: **Pfenning, Meinig & Partner mbB
Patent- und Rechtsanwälte
Joachimsthaler Straße 10-12
10719 Berlin (DE)**

(56) References cited:
WO-A1-2014/164124     WO-A1-2014/164845
DE-A1- 10 122 541     DE-A1-102007 025 549

**Description**

RELATED APPLICATION

The present application claims the benefit of U. S. Provisional Application No. 61/787,319 filed on March 15, 2013.

FIELD OF THE INVENTION

The present invention relates to internal combustion engines and more specifically to a torque spike cancellation device for use with an internal combustion engine.

BACKGROUND OF THE INVENTION

Due to recent improvements in combustion engine technology, there has been a trend to downsize internal combustion engines used in vehicles. Such improvements also result in more efficient vehicle, while maintaining similar performance characteristics and vehicle form factors favoured by consumers

One common improvement used with internal combustion engines is the addition of a supercharger or a turbocharger. Typically, the addition of the supercharger or the turbocharger is used to increase a performance of an engine that has been decreased in displacement or a number of engine cylinders. Such improvements typically result in an increased torque potential of the engine, enabling the use of longer gear ratios in a transmission of the vehicle. The longer gear ratios in the transmission enable engine down-speeding. Engine down-speeding is a practice of operating the engine at lower operating speeds. Such improvement s typically result in improved fuel economy, operation near their most efficient level for a greater amount of time compared to conventional engines, and reduced engine emissions.

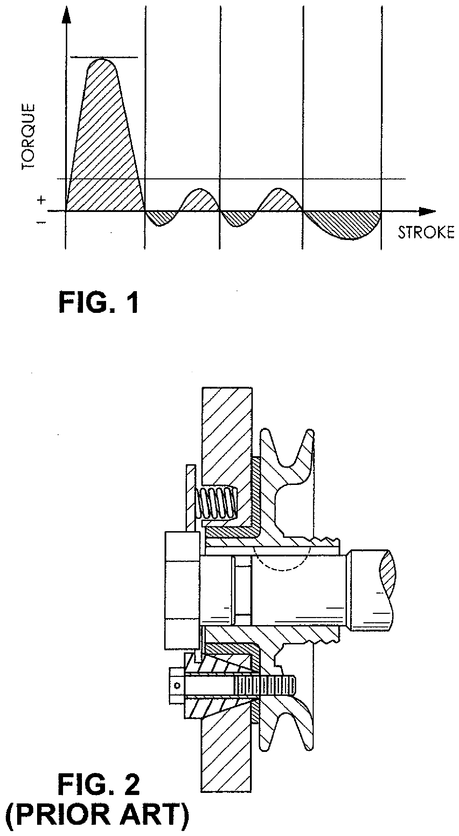

In some designs, however, engine down-speeding can result in an undesirable increase in torque spike at low operating speeds of the engine. For example, a significantly increased torque spike can appear at an engine output when the engine is operating at low idle speeds. The torque spike is a well-known engine dynamic that results from torque not being delivered constantly, but periodically during each power stroke of the operating cycle of an internal combustion engine. FIG. 1 is a graph illustrating a torque output of an engine during a four stroke cycle of an engine. In the four stroke cycle, the torque spike happens once every two turns of a crankshaft for each cylinder of the engine. Accordingly, a four cylinder engine will have two torque spikes per crankshaft turn while a three cylinder engine will have three spikes every two crankshaft turns.

An amplitude of the torque spike also varies with an operating speed of the engine and a load applied to the engine. A phase of the torque spike varies with an operating speed and a load applied to the engine. Torque spikes can cause many problems for components of the vehicle near the engine, such as but not limited to: increased stress on the components, increased wear on the components, and exposure of the components to severe vibrations. These problems can damage a powertrain of the vehicle and result in poor drivability of the vehicle. In order to reduce the effects of these problems, smooth an operation of the engine, and improve an overall performance of the engine, the torque spikes may be compensated for using an engine balancing method. Many known solutions are available for multi-cylinder engine configurations to reduce or eliminate the stresses and vibration caused by the torque spikes.

Torque spike compensator devices are known in the art; however, the known device have many shortcomings. In many conventional vehicles, the torque spikes are compensated for using at least one flywheel. FIG. 2 illustrates a conventional flywheel based damping system. In other applications, a dual-mass flywheel system may be used. An inertia of the flywheel dampens a rotational movement of the crankshaft, which facilitates operation of the engine running at a substantially constant speed. Flywheels may also be used in combination with other dampers and absorbers.

A weight of the flywheel, however, can become a factor in such torque spike compensating devices. A lighter flywheel accelerates faster but also loses speed quicker, while a heavier flywheel retain speeds better compared to the lighter flywheel, but the heavier flywheel is more difficult to slow down. However, a heavier flywheel provides a smoother power delivery, but makes an associated engine less responsive, and an ability to precisely control an operating speed of the engine is reduced.

In addition to a weight of the flywheel, another problem with conventional inertia and damping systems is a lack of adaptability. The conventional inertia and damping systems are designed for the worst operational condition and must be large enough to dampen vibrations at lower operating speeds. As a result, the conventional inertia and damping systems are not optimized for higher operating speeds, resulting in inadequate performance.

DE10122541A1 relates to a drive device having an internal combustion engine, at least one flywheel weight and a force transmission device. The internal combustion engine is connected to the force transmission device via a gearbox with a periodically variable transmission ratio. The flywheel weight and force transmission devices are mounted at different ends of the engine's crankshaft.

It would be advantageous to develop a torque spike cancellation device which may be dynamically adapted for both an amplitude and a phase of a torque spike while minimizing an interference with an operation of an internal combustion engine.

## SUMMARY OF THE INVENTION

Presently provided by the invention, a torque spike cancellation device according to claim 1 which may be dynamically adapted for both an amplitude and a phase of a torque spike while minimizing an interference with an operation of an internal combustion engine, has surprisingly been discovered.

In one embodiment, the present invention is directed to a torque spike cancellation device for an internal combustion engine. The torque spike cancellation device comprises a first member, a second member, and a third member. The first member is in driving engagement with an output of the internal combustion engine. The second member is in driving engagement with the first member. The third member is in driving engagement with the second member. An angular deviation between the first member and one of the second member and the third member causes a cyclical acceleration of the third member. The cyclical acceleration of the third member adjusts a torque applied to the third member by the internal combustion engine.

In another embodiment, the present invention is directed to a torque spike cancellation device for an internal combustion engine. The torque spike cancellation device comprises a first Cardan joint assembly and a second Cardan joint assembly. The first Cardan joint assembly includes a first member, a second member, and a third member. The first member is in driving engagement with an output of the internal combustion engine. The second member is in driving engagement with the first member. The third member is in driving engagement with the second member. The second Cardan joint assembly is in driving engagement with the third member of the first Cardan joint assembly. An angular deviation between the first member and one of the second member and the third member causes a cyclical acceleration of the third member. The cyclical acceleration of the third member adjusts a torque applied to the third member and the second Cardan joint assembly by the internal combustion engine.

In yet another embodiment, the present invention is directed to a torque spike cancellation device for an internal combustion engine. The torque spike cancellation device comprises a first member, a second member, a third member, and an adjustment member. The first member is in driving engagement with an output of the internal combustion engine. The second member is in driving engagement with the first member. The third member is in driving engagement with the second member. The adjustment member is in driving engagement with the second member. The first member, the second member, and the adjustment member are at least partially disposed within the third member. An angular deviation between the first member and the second member may be adjusted using the adjustment member, causing a cyclical acceleration of the third member. The cyclical acceleration of the third member adjusts a torque applied to the third member by the internal combustion engine.

Various aspects of this invention will become apparent to those skilled in the art from the following detailed description of the preferred embodiment, when read in light of the accompanying drawings.

## BRIEF DESCRIPTION OF THE FIGURES

The above, as well as other advantages of the present invention will become readily apparent to those skilled in the art from the following detailed description when considered in the light of the accompanying drawings in which:

FIG. 1 is a a graph illustrating a torque output of an engine during a four stroke cycle of an engine;

FIG. 2 is a sectional view of a flywheel based damping system known in the prior art;

FIG. 3 is a perspective, schematic illustration of a torque spike cancellation device according to an embodiment of the present invention;

FIG. 4 is a schematic illustration of a torque spike cancellation device according to another embodiment;

FIG. 5 is a schematic illustration of a torque spike cancellation device according to another embodiment;

FIG. 6 is a schematic illustration of a torque spike cancellation device according to another embodiment of the present invention;

FIG. 7 is a schematic illustration of a torque spike cancellation device according to another embodiment;

FIG. 8 is a sectional view of a torque spike cancellation device according to another embodiment;

FIG. 9 is a chart illustrating a variation of angular velocity of a driven shaft as a function of an angular rotation of a driving shaft, the chart illustrating the summation of an input function and a function 45° out of phase with the input function, forming a net output function;

FIG. 10 is a chart illustrating a variation of a percentage of mean torque of an engine as a function of crankshaft position of the engine, the chart illustrating a function representative of the engine, a function representative of a system, and a function representative of a Cardan joint;

FIG. 11 is a chart illustrating a variation of angular velocity of a driven shaft as a function of an angular rotation of a driving shaft, the chart illustrating the variation of angular velocity of an input shaft joint, an output shaft joint, and an exemplary net output of the torque spike cancellation device illustrated in FIGS. 4, 5, and 7;

FIG. 12 is a chart illustrating a variation of angular velocity of a driven shaft as a function of an angular rotation of a driving shaft, the chart illustrating an exemplary variation of angular velocity of the torque spike cancellation device illustrated in FIG. 6, showing the torque spike cancellation device about 45° out of phase and showing the torque spike cancellation device substantially in phase;

FIG. 13 is a chart illustrating a torque and crank angle of an exemplary internal combustion engine with respect to a given rotational speed, the internal combustion engine under a full load;

FIG. 14 is a chart illustrating a torque and crank angle of an exemplary internal combustion engine with respect to a given rotational speed, the engine under no load; and

FIG. 15 is a chart illustrating a flywheel torque of an exemplary four cylinder engine with respect to a given crank angle, the engine under a full load.

DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined herein. Hence, specific dimensions, directions or other physical characteristics relating to the embodiments disclosed are not to be considered as limiting, unless expressly stated otherwise.

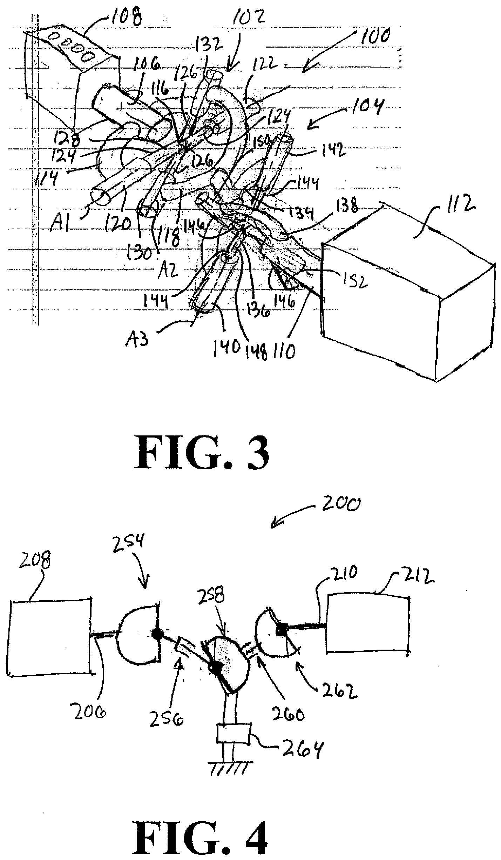

FIG. 3 illustrates a torque spike cancellation device 100.

As the other embodiments of torque spike cancellation devices described herein, this torque spike cancellation device 100 is a torque ripple compensating device.

The torque spike cancellation device 100 comprises a first Cardan joint assembly 102, and a second Cardan joint assembly 104. The torque spike cancellation device 100 is in driving engagement with a main shaft 106 of an internal combustion engine 108 and an input shaft 110 of a transmission 112. The first Cardan joint assembly 102 is in driving engagement with the main shaft 106 and the second Cardan joint assembly 104. The second Cardan joint assembly 104 is in driving engagement with the first Cardan joint assembly 102 and the input shaft 110 of the transmission 112.

The first Cardan joint assembly 102 comprises a first driving yoke 114, a first cross-shaft 116, and a first driven yoke 118. The first Cardan joint assembly 102 facilitates driving engagement between the main shaft 106 and the second Cardan joint assembly 104. In the first Cardan joint assembly 102, a relation between the first driving yoke 114 and the first driven yoke 118 may be described using the the following equation:

$$\tan(\beta_1) = \cos(\theta)\tan(\beta)$$

In the above equation, $\theta$ is the angle between the first driving yoke 114 and the first driven yoke 118, $\beta$ is the angle of rotation of the first driving yoke 114 and $\beta_1$ is the angle of rotation of the first driven yoke 118. Furthermore, as the angles of rotation are different for the first driving yoke 114 and the first driven yoke 118, the rotation speeds and accelerations will also be slightly different. The relation between the two rotational speeds is the following:

$$\omega_1 = \frac{\omega\cos(\theta)}{1 - \sin^2(\beta)\sin^2(\theta)}$$

In the above equation, $\omega$ is the rotational speed of the first driving yoke 114 and $\omega_1$ is the rotational speed of the first driven yoke 118. A speed difference and an acceleration of the first driven yoke 118 may be described using a second order phenomenon (sinusoidal with a period of 180 °).

The first driving yoke 114 is a rigid member in driving engagement with the main shaft 106 and the first cross-shaft 106. As shown in FIG. 3, the first driving yoke 114 is a substantially U-shaped member, but it is understood that the first driving yoke 114 may have other shapes. The first driving yoke 114 defines a first pivot point 120 and a second pivot point 122. The first pivot point 120 and the second pivot point 122 are cylindrical recesses formed in the first driving yoke 114. The first pivot point 120 and the second pivot point 122 are each oriented along a first axis A1. The first pivot point 120 and the second pivot point 122 are in rotatable driving engagement with the first cross-shaft 116.

The first cross-shaft 116 is a rigid member in driving engagement with the first driving yoke 114 and the first driven yoke 118. The first cross-shaft 116 is a cross-shaped member and comprises a pair of primary trunnions 124, a pair of secondary trunnions 126, and a central portion 128. The first cross-shaft 116 is unitarily formed, however, it is understood that the first cross-shaft 116 may comprise a plurality of portions coupled together in any conventional manner. The pair of primary trunnions 124 is opposingly disposed about the central portion 128. The pair of primary trunnions 124 is disposed in the first pivot point 120 and the second pivot point 122, facilitating rotatable driving engagement between the first cross-shaft 116 and the first driving yoke 114. While not shown in FIG. 3, it is understood that a bearing (not shown) may be disposed between each of the trunnions 124 and the first pivot point 120 and the second pivot point 122. The pair of secondary trunnions 126 is opposingly disposed about the central portion 128 and is oriented transverse to the pair of primary trunnions 124. An axis of the pair of secondary trunnions 126 is also coplanar with an axis of the pair of primary trunnions 124. The pair of secondary trunnions 126 facilitates rotatable driving engagement between the first cross-shaft 116 and the first driven yoke 118.

The first driven yoke 118 is a rigid member in driving engagement with the first cross-shaft 106 and the second Cardan joint assembly 104. It is understood that the first driven yoke 118 and a portion of the second Cardan joint assembly 104 may be unitarily formed. As shown in FIG. 3, the first driven yoke 118 is a substantially U-shaped member, but it is understood that the first driven yoke 118 may have other shapes. The first driven yoke 118 defines a third pivot point 130 and a fourth pivot point 132. The third pivot point 130 and the fourth pivot point 132 are cylindrical recesses formed in the first driven yoke 118. The third pivot point 130 and the fourth pivot point 132 are each oriented along a second axis A2. The third pivot point 130 and the fourth pivot point 132 are in rotatable driving engagement with the first cross-shaft 116.

The second Cardan joint assembly 104 comprises a second driving yoke 134, a second cross-shaft 136, and a second driven yoke 138. The second Cardan joint assembly 104 facilitates driving engagement between the first Cardan joint assembly 102 and the input shaft 110 of the transmission 112. In the second Cardan joint assembly 104, a relation between the second driving yoke 134 and the second driven yoke 138 may be described using the equation presented above. Furthermore, as the angles of rotation are different for the second driving yoke 134 and the second driven yoke 138, the rotation speeds and accelerations will also be slightly different. The relation between the two rotational speeds may be described using the equation presented above. A speed difference and an acceleration of the second driven yoke 138 may be described using a second order phenomenon (sinusoidal with a period of 180 °).

The second driving yoke 134 is a rigid member in driving engagement with the first driven yoke 118 and the second cross-shaft 136. The second driving yoke 134 may be unitarily formed with the first driven yoke 118; however, it is understood that the second driving yoke 134 may be formed separate therefrom and drivingly engaged with the first driven yoke 134 in any conventional manner. The second driving yoke 134, and thus the second Cardan joint assembly 104, is oriented 45 degrees out of phase from the first driven yoke 118, and thus the first Cardan joint assembly 102; however, it is understood that the second driving yoke 134 may be arranged out of phase with the first driven yoke 118 by another number of degrees, as long as the torque spike cancellation device 100 generates a cyclical acceleration that is used to cancel a torque spike generated by the internal combustion engine 108. As shown in FIG. 3, the second driving yoke 134 is a substantially U-shaped member, but it is understood that the second driving yoke 134 may have other shapes. The second driving yoke 134 defines a fifth pivot point 140 and a sixth pivot point 142. The fifth pivot point 140 and the sixth pivot point 142 are cylindrical recesses formed in the second driving yoke 134. The fifth pivot point 140 and the sixth pivot point 142 are each oriented along a third axis A3. The fifth pivot point 140 and the sixth pivot point 142 are in rotatable driving engagement with the second cross-shaft 136.

The second cross-shaft 136 is a rigid member in driving engagement with the second driving yoke 134 and the second driven yoke 138. The second cross-shaft 136 is a cross-shaped member and comprises a pair of primary trunnions 144, a pair of secondary trunnions 146, and a central portion 148. The second cross-shaft 136 is unitarily formed, however, it is understood that the second cross-shaft 136 may comprise a plurality of portions coupled together in any conventional manner. The pair of primary trunnions 144 is opposingly disposed about the central portion 148. The pair of primary trunnions 144 is disposed in the fifth pivot point 140 and the sixth pivot point 142, facilitating rotatable driving engagement between the second cross-shaft 136 and the second driving yoke 134. While not shown in FIG. 3, it is understood that a bearing (not shown) may be disposed between each of the trunnions 144 and the fifth pivot point 140 and the sixth pivot point 142. The pair of secondary trunnions 146 is opposingly disposed about the central portion 148 and is oriented transverse to the pair of primary trunnions 144. An axis of the pair of secondary trunnions 146 is also coplanar with an axis of the pair of primary trunnions 144. The pair of secondary trunnions 146 facilitates rotatable driving engagement between the second cross-shaft 136 and the second driven yoke 138.

The second driven yoke 138 is a rigid member in driving engagement with the second cross-shaft 136 and the input shaft 110 of the transmission 112. As shown in FIG. 3, the second driven yoke 138 is a substantially U-shaped member, but it is understood that the second driven yoke 138 may have other shapes. The second driven yoke 138 defines a seventh pivot point 150 and a eighth pivot point 152. The seventh pivot point 150 and the eight pivot point 152 are cylindrical recesses formed in the second driven yoke 138. The seventh pivot point 150 and the eighth pivot point 152 are each oriented along a fourth axis A4. The seventh pivot point 150 and the eighth pivot point 152 are in rotatable driving engagement with the second cross-shaft 136.

The internal combustion engine 108 applies power to the main shaft 106 through a crankshaft (not shown). The internal combustion engine 108, for example, is a four cycle internal combustion engine; however, it is understood that the internal combustion engine 108 may be another type of internal combustion engine that generates a torque spike. It is understood that the internal combustion engine 108 may be a hybrid power source including both an internal combustion engine and an electric motor.

The main shaft 106 is in driving engagement with the internal combustion engine 108 and the first Cardan joint assembly 102. The main shaft 106 may form a portion of one of the internal combustion engine 108 and the first Cardan joint assembly 102, or the main shaft 106 may be formed separate therefrom. The main shaft 106 is in driving engagement with the internal combustion engine 108 and the first Cardan joint assembly 102 through splined connections formed on each end thereof; alternately, it is understood that the main shaft 106 may be in driving engagement with the internal combustion engine 108 and the first Cardan joint assembly 102 in any other conventional manner.

The transmission 112 facilitates driving engagement between the second driven yoke 138 of the second Cardan joint assembly 104 and a ground engaging device (not shown) in a plurality of drive ratios. The transmission 112 may be an automatic transmission, a manual transmission, a continuously variable transmission, or another type of transmission. As known in the art, the transmission 112 may include a clutching device (not shown).

FIG. 4 illustrates a torque spike cancellation device 200 according to another embodiment. The torque spike cancellation device 200 is a variation of the torque spike cancellation device 100, and has similar features thereto. The variation shown in FIG. 4 includes similar components to the torque spike cancellation device 100 illustrated in FIG. 3. Similar features of the variation shown in FIG. 4 are numbered similarly in series, with the exception of the features described below.

The torque spike cancellation device 200 comprises a first Cardan joint assembly 254, a first intermediate shaft 256, a second Cardan joint assembly 258, a second intermediate shaft 260, and a third Cardan joint assembly 262. The torque spike cancellation device 200 is in driving engagement with a main shaft 206 of an internal combustion engine 208 and an input shaft 210 of a transmission 212. The first Cardan joint assembly 254 is in driving engagement with the main shaft 206 and the second Cardan joint assembly 258 through the first intermediate shaft 256. The second Cardan joint assembly 258 is also in driving engagement with the third Cardan joint assembly 262 through the second intermediate shaft 260. The third Cardan joint assembly 262 is also in driving engagement with the input shaft 210 of the transmission 212.

The first Cardan joint assembly 254 facilitates driving engagement between the main shaft 206 and first intermediate shaft 256. The first Cardan joint assembly 254 is similar in structure and function to the first Cardan joint assembly 102 as described hereinabove.

The first intermediate shaft 256 is a rigid member in driving engagement with the first Cardan joint assembly 254 and the second Cardan joint assembly 258. The first intermediate shaft 256 is a telescoping shaft which facilitates adjusting a position of the second Cardan joint assembly 258 with respect to the first Cardan joint assembly 254. The first intermediate shaft 256 is in driving engagement with the first Cardan joint assembly 254 through a splined connection; however, it is understood that the first intermediate shaft 256 may be unitarily formed with the first Cardan joint assembly 254 or that the first intermediate shaft 256 may be in driving engagement with the first Cardan joint assembly 254 in any conventional manner. The first intermediate shaft 256 is in driving engagement with the second Cardan joint assembly 254 through a splined connection; however, it is understood that the first intermediate shaft 256 may be unitarily formed with the second Cardan joint assembly 254 or that the first intermediate shaft 256 may be in driving engagement with the second Cardan joint assembly 254 in any conventional manner. It is also understood that in embodiments not shown, the torque spike cancellation device 200 may not include the first intermediate shaft 256. In such embodiments, the first Cardan joint assembly 254 is directly drivingly engaged with the second Cardan joint assembly 258 in a telescoping manner.

The second Cardan joint assembly 258 facilitates driving engagement between the first intermediate shaft 256 and the second intermediate shaft 260. The second Cardan joint assembly 258 is similar in structure and function to the first Cardan joint assembly 102 as described hereinabove. The second Cardan joint assembly 258 is also in rotatable driving engagement with a joint actuator 264. The joint actuator 264 facilitates positioning the second Cardan joint assembly 258 with respect to the first Cardan joint assembly 254 and the third Cardan joint assembly 262.

The second intermediate shaft 260 is a rigid member in driving engagement with the second Cardan joint assembly 258 and the third Cardan joint assembly 262. The second intermediate shaft 260 is a telescoping shaft which facilitates adjusting a position of the second Cardan joint assembly 258 with respect to the third Cardan joint assembly 262. The second intermediate shaft 260 is in driving engagement with the second Cardan joint assembly 258 through a splined connection; however, it is understood that the second intermediate shaft 260 may be unitarily formed with the second Cardan joint assembly 258 or that the second intermediate shaft 260 may be in driving engagement with the second Cardan joint assembly 258 in any conventional manner. The second intermediate shaft 260 is in driving engagement with the third Cardan joint assembly 262 through a splined connection; however, it is understood that the second intermediate shaft 260 may be unitarily formed with the third Cardan joint assembly 262 or that the second intermediate shaft 260 may be in driving engagement with the third Cardan joint assembly 262 in any conventional manner. It is also understood that in embodiments not shown, the torque spike cancellation device 200 may not include the second intermediate shaft 260. In such embodiments, the second Cardan joint assembly 258 is directly drivingly engaged with the third Cardan joint assembly 262 in a telescoping manner.

The third Cardan joint assembly 262 facilitates driving engagement between the second intermediate shaft 260 and the input shaft 210 of the transmission 212.

The third Cardan joint assembly 262 is similar in structure and function to the first Cardan joint assembly 102 as described hereinabove.

It is understood that at least one of the second Cardan joint assembly 258 and the third Cardan joint assembly 262 is not phased in relation to the first Cardan joint assembly 254. Phasing one of the second Cardan joint assembly 258 and the third Cardan joint assembly 262 in relation to the first Cardan joint assembly 254 may be performed by orienting at least one of the second Cardan joint assembly 258 and the third Cardan joint assembly 262 to the first Cardan joint assembly 254 in a manner similar to the Cardan joint assemblies 102, 104 of the torque spike cancellation device 100 as described hereinabove. It is also understood that the Cardan joint assemblies 254, 258, 262 may be oriented in relation to one another in any manner as long as the Cardan joint assemblies 254, 258, 262 are arranged to not cancel a speed difference and an acceleration of a portion of the third Cardan joint assembly 262 in driving engagement with the input shaft 210 of the transmission 212 compared to a portion of the first Cardan joint assembly 254 in driving engagement with the main shaft 206 of the internal combustion engine 208.

The joint actuator 264 is an actuator in driving engagement with the second Cardan joint assembly 258 and a housing (not shown) the torque spike cancellation device 200 is disposed in. The joint actuator 264 may be a hydraulic actuator, a pneumatic actuator, a screw driven actuator, or any other type of known actuator. In response to a control signal from a controller (not shown), the joint actuator 264 applies a force to the second Cardan joint assembly 258 to move the second Cardan joint assembly 258 with respect to the first Cardan joint assembly 254 and the third Cardan joint assembly 262, changing an angle of each of the Cardan joint assemblies 254, 258, 262 and a length of the intermediate shafts 256, 260. In response to the second Cardan joint assembly 258 being moved with respect to the first Cardan joint assembly 254 and the third Cardan joint assembly 262, a speed difference and an acceleration of a portion of the third Cardan joint assembly 262 is adjusted compared to a portion of the first Cardan joint assembly 254 in driving engagement with the main shaft 206, thus changing an amplitude of a torque applied to the input shaft 210 of the transmission 212 generated by at least one of the Cardan joint assemblies 254, 258, 262. It is understood that the torque spike cancellation device 200 may be adjusted dynamically during operation of the internal combustion engine 208.

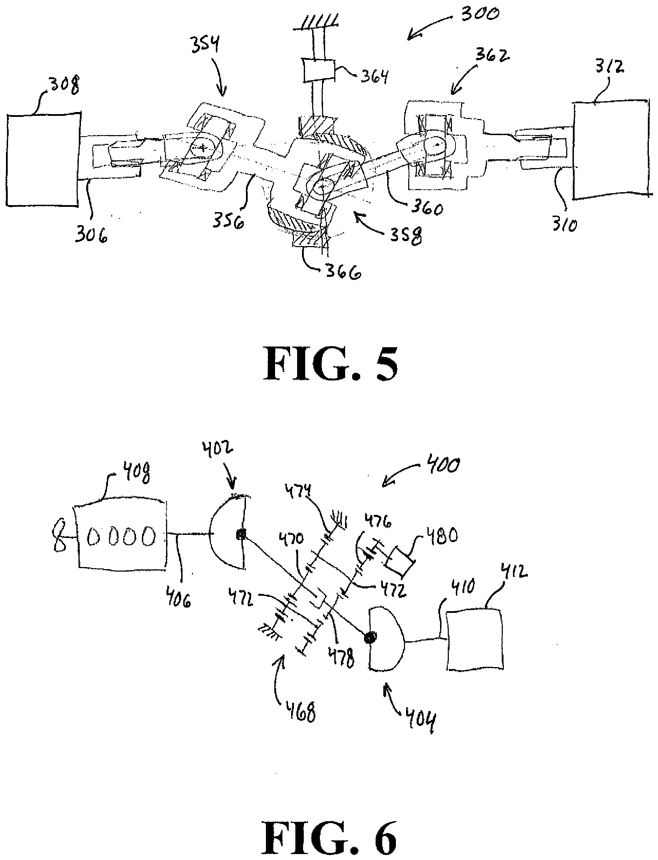

FIG. 5 illustrates a torque spike cancellation device 300 according to another embodiment. The torque spike cancellation device 300 is a variation of the torque spike cancellation device 100, and has similar features thereto. The variation shown in FIG. 5 includes similar components to the torque spike cancellation device 100 illustrated in FIG. 3. Similar features of the variation shown in FIG. 5 are numbered similarly in series, with the exception of the features described below.

The torque spike cancellation device 300 comprises a first Cardan joint assembly 354, a first intermediate shaft 356, a second Cardan joint assembly 358, a second intermediate shaft 360, and a third Cardan joint assembly 362. The torque spike cancellation device 300 is in driving engagement with a main shaft 306 of an internal combustion engine 308 and an input shaft 310 of a transmission 312. The first Cardan joint assembly 354 is in driving engagement with the main shaft 306 and the second Cardan joint assembly 358 through the first intermediate shaft 356. The second Cardan joint assembly 358 is also in driving engagement with the third Cardan joint assembly 302 through the second intermediate shaft 360. The third Cardan joint assembly 302 is also in driving engagement with the input shaft 310 of the transmission 312.

The first Cardan joint assembly 354 facilitates driving engagement between the main shaft 306 and first intermediate shaft 356. The first Cardan joint assembly 354 is similar in structure and function to the first Cardan joint assembly 302 as described hereinabove. The main shaft 306 is in driving engagement with the first Cardan joint assembly 354 through a sliding splined connection, facilitating axial movement between the first Cardan joint assembly 354 and the main shaft 306 along an axis of the main shaft 306. The sliding spline connection facilitates adjusting a position of the second Cardan joint assembly 358 with respect to the main shaft 306.

The first intermediate shaft 356 is a rigid member in driving engagement with the first Cardan joint assembly 354 and the second Cardan joint assembly 358. The first intermediate shaft 356 is unitarily formed with the first Cardan joint assembly 354; however, it is understood that the first intermediate shaft 356 may be formed separate from the first Cardan joint assembly 354 and in driving engagement therewith in any conventional manner. The first intermediate shaft 356 is in driving engagement with the second Cardan joint assembly 354 by being unitarily formed therewith; however, it is understood that the first intermediate shaft 356 may be in driving engagement with the second Cardan joint assembly 354 in any conventional manner. It is also understood that in embodiments not shown, the torque spike cancellation device 300 may not include the first intermediate shaft 356. In such embodiments, the first Cardan joint assembly 354 is directly drivingly engaged with the second Cardan joint assembly 358.

The second Cardan joint assembly 358 facilitates driving engagement between the first intermediate shaft 356 and the second intermediate shaft 360. The second Cardan joint assembly 358 is similar in structure and function to the first Cardan joint assembly 102 as described hereinabove. The second Cardan joint assembly 358 is also in rotatable driving engagement with a joint actuator 364 through a spherical bearing 366. The joint actuator 364 facilitates positioning the second Cardan joint assembly 358 with respect to the main shaft 306 and the input shaft 310. The spherical bearing 366 facilitates rotation of the second Cardan joint assembly 358 while allowing the joint actuator 364 to adjust a position thereof.

The second intermediate shaft 360 is a rigid member in driving engagement with the second Cardan joint assembly 358 and the third Cardan joint assembly 362. The second intermediate shaft 360 is formed separate from the second Cardan joint assembly 358; however, it is understood that the second intermediate shaft 360 may be unitarily formed with at least one of the second Cardan joint assembly 358 and the third Cardan joint assembly 362 and may be in driving engagement therewith in any conventional manner. It is also understood that in embodiments of the invention not shown, the torque spike cancellation device 300 may not include the second intermediate shaft 360. In such embodiments, the second Cardan joint assembly 358 is directly drivingly engaged with the third Cardan joint assembly 362.

The third Cardan joint assembly 362 facilitates driving engagement between the input shaft 310 and second intermediate shaft 360. The third Cardan joint assembly 362 is similar in structure and function to the first Cardan joint assembly 302 as described hereinabove. The input shaft 310 is in driving engagement with the third Cardan joint assembly 362 through a sliding splined connection, facilitating axial movement between the third Cardan joint assembly 362 and the input shaft 310 along an axis of the input shaft 310. The sliding spline connection facilitates adjusting a position of the second Cardan joint assembly 358 with respect to the input shaft 310.

It is understood that at least one of the second Cardan joint assembly 358 and the third Cardan joint assembly 362 is not phased in relation to the first Cardan joint assembly 354. Phasing one of the second Cardan joint assembly 358 and the third Cardan joint assembly 362 in relation to the first Cardan joint assembly 354 may be performed by orienting at least one of the second Cardan joint assembly 358 and the third Cardan joint assembly 362 to the first Cardan joint assembly 354 in a manner similar to the Cardan joint assemblies 102, 104 of the torque spike cancellation device 100 as described hereinabove. It is also understood that the Cardan joint assemblies 354, 358, 362 may be oriented in relation to one another in any manner as long as the Cardan joint assemblies 354, 358, 362 are arranged to not cancel a speed difference and an acceleration of a portion of the third Cardan joint assembly 362 in driving engagement with the input shaft 310 of the transmission 312 compared to a portion of the first Cardan joint assembly 354 in driving engagement with the main shaft 306 of the internal combustion engine 308.

The joint actuator 364 is an actuator in driving engagement with the second Cardan joint assembly 358 through the spherical bearing 366 and a housing (not shown) the torque spike cancellation device 300 is disposed in. The joint actuator 364 may be a hydraulic actuator, a pneumatic actuator, a screw driven actuator, or any other type of known actuator. In response to a control signal from a controller (not shown), the joint actuator 364 applies a force to the second Cardan joint assembly 358 to move the second Cardan joint assembly 358 with respect to the first Cardan joint assembly 354 and the third Cardan joint assembly 362, changing an angle of each of the Cardan joint assemblies 354, 358, 362. In response to the second Cardan joint assembly 358 being moved with respect to the first Cardan joint assembly 354 and the third Cardan joint assembly 362, a speed difference and an acceleration of a portion of the third Cardan joint assembly 362 is adjusted compared to a portion of the first Cardan joint assembly 354 in driving engagement with the main shaft 306, thus changing an amplitude of a torque applied to the input shaft 310 of the transmission 312 generated by at least one of the Cardan joint assemblies 354, 358, 362. It is understood that the torque spike cancellation device 400 may be adjusted dynamically during operation of the internal combustion engine 408.

FIG. 6 illustrates a torque spike cancellation device 400 according to another embodiment of the present invention. The torque spike cancellation device 400 is a variation of the torque spike cancellation device 100, and has similar features thereto. The variation of the invention shown in FIG. 6 includes similar components to the torque spike cancellation device 100 illustrated in FIG. 3. Similar features of the variation shown in FIG. 6 are numbered similarly in series, with the exception of the features described below.

The torque spike cancellation device 400 comprises a first Cardan joint assembly 402, a planetary gear adjuster assembly 468, and a second Cardan joint assembly 404. The first Cardan joint assembly 402 and the second Cardan joint assembly 404 are similar in structure and function to the first Cardan joint assembly 102 and the second Cardan joint assembly 104 described hereinabove; however, the first Cardan joint assembly 402 and the second Cardan joint assembly 404 are each drivingly engaged with the planetary gear adjuster assembly 468 as illustrated in FIG. 6. The torque spike cancellation device 400 is in driving engagement with a main shaft 406 of an internal combustion engine 408 and an input shaft 410 of a transmission 412. The first Cardan joint assembly 402 is in driving engagement with the main shaft 406 and the planetary gear adjuster assembly 468. The second Cardan joint assembly 404 is in driving engagement with the planetary gear adjuster assembly 468 and the input shaft 410 of the transmission 412.

The planetary gear adjuster assembly 468 is in driving engagement with the first Cardan joint assembly 402 and the second Cardan joint assembly 404. The planetary gear adjuster assembly 468 comprises an input gear 470, a plurality of dual planetary gears 472, a first ring gear 474, a second ring gear 476, an output gear 478, and an actuator 480. The planetary gear adjuster assembly 468 facilitates adjusting a relationship between the input gear 470 and the output gear 478, thereby adjusting an amplitude of a torque applied to the input shaft 410 of the transmission 412 generated by at least one of the Cardan joint assemblies 402, 404.

The input gear 470 is a geared shaft in driving engagement with a portion of the first Cardan joint assembly 402 and a portion of each of the dual planetary gears 472. The input gear 470 includes a radially extending portion having a plurality of teeth formed therein, the plurality of teeth drivingly engaged with a portion of each of the dual planetary gears 472.

The plurality of dual planetary gears 472 are geared shafts oriented in a substantially parallel manner to the input gear 470. Each of the dual planetary gears 472 includes a first geared portion and a second geared portion. The first geared portion and the second geared portion are rotatable about a shaft portion. The first geared portion is in driving engagement with the input gear 470 and the second geared portion is in driving engagement with the output gear 478. The planetary gear adjuster assembly 468 includes at least three dual planetary gears 472; however, it is understood that the planetary gear adjuster assembly 468 may include a greater number.

The first ring gear 474 is a ring gear disposed about the input gear 470 and a portion of the dual planetary gears 472. The first ring gear 474 is in driving engagement with the first geared portion of each of the dual planetary gears 472. The first ring gear 474 is coupled to a housing (not shown) of the torque spike cancellation device 400, grounding the first ring gear 474; however, it is understood that a functional role of the first ring gear 474 and the second ring gear 476 may be reversed.

The second ring gear 476 is a ring gear disposed about the output gear 478 and a portion of the dual planetary gears 472. The second ring gear 476 is in driving engagement with the second geared portion of each of the dual planetary gears 472. The second ring gear 476 is rotatably disposed within the housing of the torque spike cancellation device 400, and is in driving engagement with the actuator 480 to facilitate rotation of the second ring gear 476; however, it is understood that a functional role of the second ring gear 476 and the first ring gear 474 may be reversed.

The output gear 478 is a geared shaft in driving engagement with a portion of the second Cardan joint assembly 404 and the second geared portion of each of the dual planetary gears 472. The output gear 478 includes a radially extending portion having a plurality of teeth formed therein, the plurality of teeth drivingly engaged with the second geared portion of each of the dual planetary gears 472.

The actuator 480 is a rotary actuator in communication with a controller (not shown). The actuator 480 is in driving engagement with the second ring gear 476 to facilitate rotation of the second ring gear 476 within the housing of the torque spike cancellation device 400. When the second ring gear 476 is rotated by the actuator 480, the input gear 470 and the output gear 478 are driven in opposite directions through the dual planetary gears 472 as a result of the first ring gear 474 being grounded. Accordingly, a relationship between the input gear 470 and the output gear 478, and thus the first Cardan joint assembly 402 and the second Cardan joint assembly 404, is adjusted. As a result an amplitude of a torque applied to the input shaft 410 of the transmission 412 generated by at least one of the Cardan joint assemblies 402, 404 is adjusted. It is understood that the torque spike cancellation device 400 may be adjusted dynamically during operation of the internal combustion engine 408.

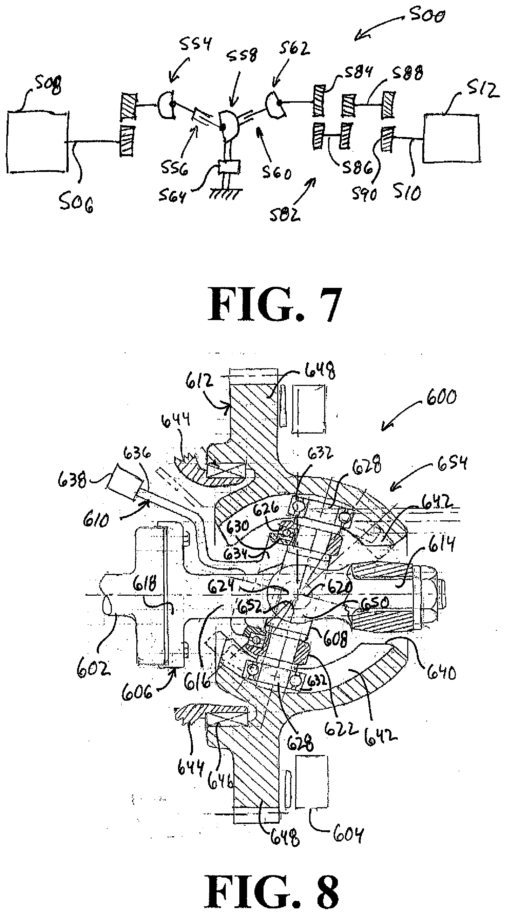

FIG. 7 illustrates a torque spike cancellation device 500 according to another embodiment. The torque spike cancellation device 500 is a variation of the torque spike cancellation device 100, and has similar features thereto. The variation shown in FIG. 7 includes similar components to the torque spike cancellation device 200 illustrated in FIG. 4. Similar features of the variation shown in FIG. 7 are numbered similarly in series, with the exception of the features described below.

The torque spike cancellation device 500 comprises a first Cardan joint assembly 554, a first intermediate shaft 556, a second Cardan joint assembly 558, a second intermediate shaft 560, a third Cardan joint assembly 562, and a ratio adjusting assembly 582. The torque spike cancellation device 500 is in driving engagement with a main shaft 506 of an internal combustion engine 508 and an input shaft 510 of a transmission 512. The first Cardan joint assembly 554 is in driving engagement with the main shaft 506 and the second Cardan joint assembly 558 through the first intermediate shaft 556. The second Cardan joint assembly 558 is also in driving engagement with the third Cardan joint assembly 502 through the second intermediate shaft 560. The third Cardan joint assembly 502 is also in driving engagement with the ratio adjusting assembly 582. The ratio adjusting assembly 582 is also in driving engagement with the input shaft 510 of the transmission 512.

The first Cardan joint assembly 554 facilitates driving engagement between the main shaft 506 and first intermediate shaft 556. The first Cardan joint assembly 554 is similar in structure and function to the first Cardan joint assembly 102 as described hereinabove.

The first intermediate shaft 556 is a rigid member in driving engagement with the first Cardan joint assembly 554 and the second Cardan joint assembly 558. The first intermediate shaft 556 is a telescoping shaft which facilitates adjusting a position of the second Cardan joint assembly 558 with respect to the first Cardan joint assembly 554. The first intermediate shaft 556 is in driving engagement with the first Cardan joint assembly 554 through a splined connection; however, it is understood that the first intermediate shaft 556 may be unitarily formed with the first Cardan joint assembly 554 or that the first intermediate shaft 556 may be in driving engagement with the first Cardan joint assembly 554 in any conventional manner. The first intermediate shaft 556 is in driving engagement with the second Cardan joint assembly 554 through a splined connection; however, it is understood that the first intermediate shaft 556 may be unitarily formed with the second Cardan joint assembly 554 or that the first intermediate shaft 556 may be in driving engagement with the second Cardan joint assembly 554 in any conventional manner. It is also understood that in embodiments not shown, the torque spike cancellation device 500 may not include the first intermediate shaft 556. In such embodiments, the first Cardan joint assembly 554 is directly drivingly engaged with the second Cardan joint assembly 558 in a telescoping manner.

The second Cardan joint assembly 558 facilitates driving engagement between the first intermediate shaft 556 and the second intermediate shaft 560. The second Cardan joint assembly 558 is similar in structure and function to the first Cardan joint assembly 502 as described hereinabove. The second Cardan joint assembly 558 is also in rotatable driving engagement with a joint actuator 564. The joint actuator 564 facilitates positioning the second Cardan joint assembly 558 with respect to the first Cardan joint assembly 554 and the third Cardan joint assembly 562.

The second intermediate shaft 560 is a rigid member in driving engagement with the second Cardan joint assembly 558 and the third Cardan joint assembly 562. The second intermediate shaft 560 is a telescoping shaft which facilitates adjusting a position of the second Cardan joint assembly 558 with respect to the third Cardan joint assembly 562. The second intermediate shaft 560 is in driving engagement with the second Cardan joint assembly 558 through a splined connection; however, it is understood that the second intermediate shaft 560 may be unitarily formed with the second Cardan joint assembly 558 or that the second intermediate shaft 560 may be in driving engagement with the second Cardan joint assembly 558 in any conventional manner. The second intermediate shaft 560 is in driving engagement with the third Cardan joint assembly 562 through a splined connection; however, it is understood that the second intermediate shaft 560 may be unitarily formed with the third Cardan joint assembly 562 or that the second intermediate shaft 560 may be in driving engagement with the third Cardan joint assembly 562 in any conventional manner. It is also understood that in embodiments not shown, the torque spike cancellation device 500 may not include the second intermediate shaft 560. In such embodiments, the second Cardan joint assembly 558 is directly drivingly engaged with the third Cardan joint assembly 562 in a telescoping manner.

The third Cardan joint assembly 562 facilitates driving engagement between the second intermediate shaft 560 and the ratio adjusting assembly 582. The third Cardan joint assembly 562 is similar in structure and function to the first Cardan joint assembly 102 as described hereinabove.

It is understood that at least one of the second Cardan joint assembly 558 and the third Cardan joint assembly 562 is not phased in relation to the first Cardan joint assembly 554. Phasing one of the second Cardan joint assembly 558 and the third Cardan joint assembly 562 in relation to the first Cardan joint assembly 554 may be performed by orienting at least one of the second Cardan joint assembly 558 and the third Cardan joint assembly 562 to the first Cardan joint assembly 554 in a manner similar to the Cardan joint assemblies 102, 104 of the torque spike cancellation device 100 as described hereinabove. It is also understood that the Cardan joint assemblies 554, 558, 562 may be oriented in relation to one another in any manner as long as the Cardan joint assemblies 554, 558, 562 are arranged to not cancel a speed difference and an acceleration of a portion of the third Cardan joint assembly 562 in driving engagement with the ratio adjusting assembly 582 compared to a portion of the first Cardan joint assembly 554 in driving engagement with the main shaft 506 of the internal combustion engine 508.

The joint actuator 564 is an actuator in driving engagement with the second Cardan joint assembly 558 and a housing (not shown) the torque spike cancellation device 500 is disposed in. The joint actuator 564 may be a hydraulic actuator, a pneumatic actuator, a screw driven actuator, or any other type of known actuator. In response to a control signal from a controller (not shown), the joint actuator 564 applies a force to the second Cardan joint assembly 558 to move the second Cardan joint assembly 558 with respect to the first Cardan joint assembly 554 and the third Cardan joint assembly 562, changing an angle of each of the Cardan joint assemblies 554, 558, 562 and a length of the intermediate shafts 556, 560. In response to the second Cardan joint assembly 558 being moved with respect to the first Cardan joint assembly 554 and the third Cardan joint assembly 562, a speed difference and an acceleration of a portion of the third Cardan joint assembly 562 is adjusted compared to a portion of the first Cardan joint assembly 554 in driving engagement with the main shaft 506, thus changing an amplitude of a torque applied to the ratio adjusting assembly 582 generated by at least one of the Cardan joint assemblies 554, 558, 562. It is understood that the torque spike cancellation device 500 may be adjusted dynamically during operation of the internal combustion engine 508.

The ratio adjusting assembly 582 comprises a gearing arrangement in driving engagement with the third Cardan joint assembly 562 and an input shaft 510 of the transmission 513. The ratio adjusting assembly 582 comprises an input gear 584, a first geared shaft 586, a second geared shaft 588, and an output gear 590. The ratio adjusting assembly 582 adjusts a drive ratio between the third Cardan joint assembly 562 and an input shaft 510 of the transmission 513 to adjust a phase of a torque applied to the ratio adjusting assembly 582 generated by at least one of the Cardan joint assemblies 554, 558, 562. As a non-limiting example, the torque spike cancellation device 500 including the ratio adjusting assembly 582 may be configured to cancel a fourth order oscillation generated by the internal combustion engine 508, however, it is understood that the ratio adjusting assembly 582 may be configured to adjust another order of oscillation.

The input gear 584 is a geared shaft in driving engagement with a portion of the third Cardan joint assembly 562 and a portion of the first geared shaft 586. The input gear 584 includes a radially extending portion having a plurality of teeth formed therein, the plurality of teeth drivingly engaged with a portion of the first geared shaft 586.

The first geared shaft 586 includes a first geared portion and a second geared portion. The first geared portion is in driving engagement with the input gear 584 and the second geared portion is in driving engagement with the second geared shaft 588.

The second geared shaft 588 includes a first geared portion and a second geared portion. The first geared portion is in driving engagement with the first geared shaft 586 and the second geared portion is in driving engagement with the second output gear 590.

The output gear 590 is a geared shaft in driving engagement with the second geared portion of the second geared shaft 588 and the input shaft 510 of the transmission 512. The output gear 590 includes a radially extending portion having a plurality of teeth formed therein, the plurality of teeth drivingly engaged with the second geared portion of the second geared shaft 588.

The ratio adjusting assembly 582 as shown in FIG.7 includes three pairs of gears which adjust a drive ratio between the third Cardan joint assembly 562 and an input shaft 510 of the transmission 513 to adjust a phase of a torque applied to the ratio adjusting assembly 582 generated by at least one of the Cardan joint assemblies 554, 558, 562; however, it is understood that the ratio adjusting assembly 582 may include another number of gears having another type of arrangement.

FIG. 8 illustrates a torque spike cancellation device 600 according to another embodiment.

The torque spike cancellation device 600 is disposed between a crankshaft 602 and a clutch 604 of an internal combustion engine (not shown). The torque spike cancellation device 600 is in driving engagement with the crankshaft 602. When the clutch 604 is placed in an engaged position, the torque spike cancellation device 600 is also in driving engagement with the clutch 604. The torque spike cancellation device 600 comprises a driving member 606, a cross-shaft member 608, an adjustment member 610, a flywheel 612, and a guide member 614.

The driving member 606 is a rigid member in driving engagement with the crankshaft 602, the cross-shaft member 608, and the guide member 610. The driving member 606 comprises an engagement portion 616 and a connection portion 618. The engagement portion 616 defines a pivot point 620 therethrough. The connection portion 618 is a flanged portion of the driving member 606 removably coupled to the crankshaft 602; however, it is understood that the connection portion 618 may have another shape or may be integrally formed with the crankshaft 602.

The cross-shaft member 608 is a rigid member pivotally coupled to the driving member 606 and disposed within the flywheel 612. The cross-shaft member 608 is a substantially annular shaped member; however, it is understood that the cross-shaft member 608 may have other shapes. The cross-shaft member 608 comprises a main portion 622, a drive pin 624, an engagement recess 626, and a pair of drive trunnions 628. The main portion 622 is a ring shaped body having a pair of opposed perforations formed therethrough, which the drive pin 624 is disposed. The engagement recess 626 is an annular recess formed in the main portion 622, into which an actuation bearing 630 is disposed. The pair of drive trunnions 628 extends radially outwardly from the main portion 622 and are oriented substantially transverse and coplanar to the drive pin 624. A pair of drive bearings 632 is disposed on the drive trunnions 628.

The adjustment member 610 is an elongate member partially disposed within the flywheel 612 and in rotatable driving engagement with the cross-shaft member 608. A first end portion 634 of the adjustment member 610 is annular shaped and is in driving engagement with a portion of the actuation bearing 630. A second end portion 636 is in driving engagement with an actuator 638. In response to a force applied to the second end portion 636 by the actuator 638, the first end portion 634 applies a force to the cross-shaft member 608 through the actuation bearing 630 to pivot the cross-shaft member 608 about the drive pin 624. It is understood that the torque spike cancellation device 600 may be adjusted dynamically during operation of the internal combustion engine.

The flywheel 612 is an annular member disposed about the driving member 606 and the cross-shaft member 608. The flywheel 612 defines a central perforation 640 and a pair of drive recesses 642 therein. The flywheel 612 is rotatably mounted to a housing 644 through a flywheel bearing 646. An engagement portion 648, which extends radially outwardly from the flywheel 612, facilitates variable driving engagement of the clutch 604 with the flywheel 612.

The pair of drive recesses 642 are arc shaped recesses formed in the flywheel 612. A center point of each of the drive recesses 642 substantially corresponds to a center point of the drive pin 624. A cross-sectional shape of each of the drive recesses 642 corresponds to a shape of the drive bearings 630, which facilitate driving engagement between the cross-shaft member 608 and the flywheel 612.

The guide member 614 is a rigid member in driving engagement with the driving member 606 and the cross-shaft member 608. The guide member 614 is partially disposed within the flywheel 612 and comprises an engagement portion 650. The engagement portion 650 is a yoke shaped portion of the guide member 614 disposed between the driving member 606 and the cross-shaft member 608 and defines a pivot point 652 therethrough, which the drive pin 624 is disposed. The guide member 614 supports the driving member 606 and the cross-shaft member 608 with respect to the flywheel 612.

The driving member 606, the cross-shaft member 608, and the flywheel 612 form a Cardan joint assembly 654, which is a portion of the torque spike cancellation device 600. An angle of the Cardan joint assembly 654 is adjusted by rotating the cross-shaft member 608 about the pivot point 620 using the adjustment member 610. In response to the cross-shaft member 608 being rotated about the pivot point 62, a speed difference and an acceleration of the flywheel 612 is adjusted compared to the driving member 606 based on the Cardan joint dynamics described above. As a result of the speed difference and the acceleration applied to the flywheel 612, a torque is applied to the flywheel 612 to cancel at least a portion of a torque spike generated by internal combustion engine.

In use, the torque spike cancellation device 100, 200, 300, 400, 500, 600 is drivingly engaged with the main shaft 106, 206, 306, 406, 506 or the crankshaft 602 and the input shaft 110, 210, 310, 410, 510 or the clutch 604. The torque spike cancellation device 100, 200, 300, 400, 500, 600 is a series, torque additive device for the internal combustion engine 108, 208, 308, 408, 508. A non-homokinetic characteristic of at least one Cardan joint assembly 102, 104, 254, 258, 262, 354, 358, 362, 402, 404, 554, 558, 562, 654 is used to apply torque to the input shaft 110, 210, 310, 410, 510 or the clutch 604 and correct a torque ripple generated by the internal combustion engine 108, 208, 308, 408, 508. As described hereinabove, by adjusting an angle of the at least one Cardan joint assembly 102, 104, 254, 258, 262, 354, 358, 362, 402, 404, 554, 558, 562, 654, a speed deviation and a non-zero acceleration of the input shaft 110, 210, 310, 410, 510 or the clutch 604 occurs. As a result of the speed deviation and the non-zero acceleration, rotational characteristics (such as, but not limited to, a speed and a second order acceleration) of the input shaft 110, 210, 310, 410, 510 or the clutch 604 are adjusted from those of the main shaft 106, 206, 306, 406, 506 or the crankshaft 602. It is also understood that when the planetary gear adjuster assembly 468 or the ratio adjusting assembly 582 provide a gear ratio between the second Cardan joint assembly 404 and the input shaft 410 or the third Cardan joint assembly 562 and the input shaft 510, the planetary gear adjuster assembly 468 or the ratio adjusting assembly 582 may be configured to provide a torque of any order.

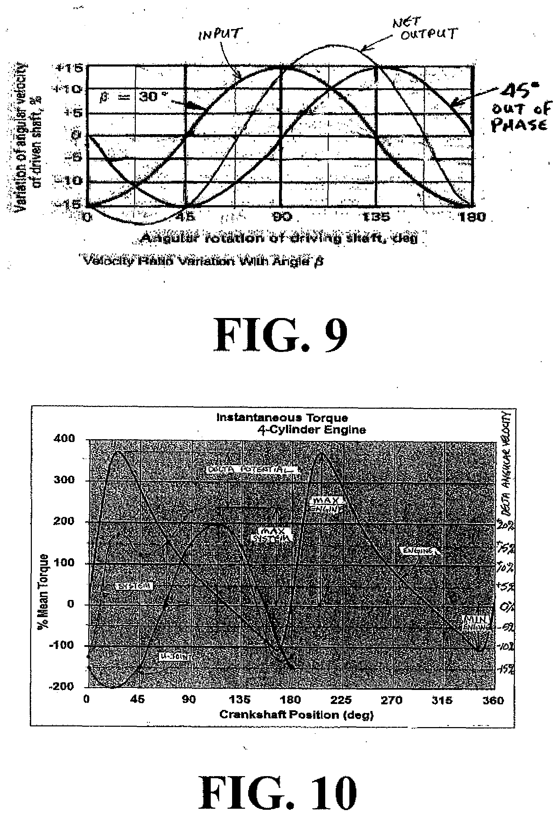

FIGS. 9-15 are charts that illustrate an operation of the torque spike cancellation device 100, 200, 300, 400, 500, 600 or the internal combustion engine 108, 208, 308, 408, 508. In view of the descriptions of the torque spike cancellation device 100, 200, 300, 400, 500, 600 provided above, the information presented in FIGS. 9-15 facilitates an understanding of the operation of the torque spike cancellation device 100, 200, 300, 400, 500, 600.

FIG. 9 is a chart illustrating a variation of angular velocity of a driven shaft as a function of an angular rotation of a driving shaft, the chart illustrating the summation of an input function and a function 45° out of phase with the input function, forming a net output function.

FIG. 10 is a chart illustrating a variation of a percentage of mean torque of an engine as a function of crankshaft position of the engine, the chart illustrating a function representative of the engine, a function representative of a system, and a function representative of a Cardan joint (u-joint).

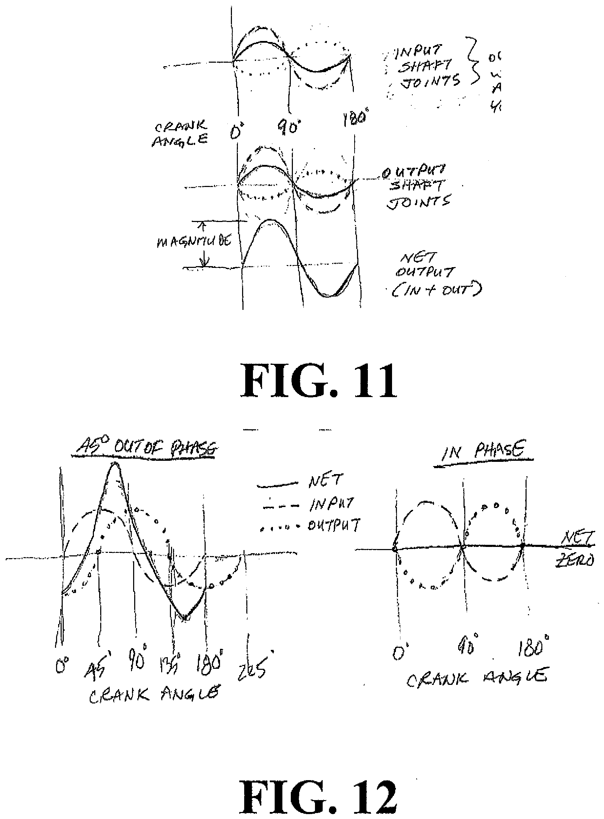

FIG. 11 is a chart illustrating a variation of angular velocity of a driven shaft as a function of an angular rotation of a driving shaft, the chart illustrating the variation of angular velocity of an input shaft joint, an output shaft joint, and a net output of the torque spike cancellation device 200, 300, 500.

FIG. 12 is a chart illustrating a variation of angular velocity of a driven shaft as a function of an angular rotation of a driving shaft, the chart illustrating the variation of angular velocity of the torque spike cancellation device 400 illustrated in FIG. 6, showing the torque spike cancellation device 400 about 45° out of phase and showing the torque spike cancellation device 400 substantially in phase.

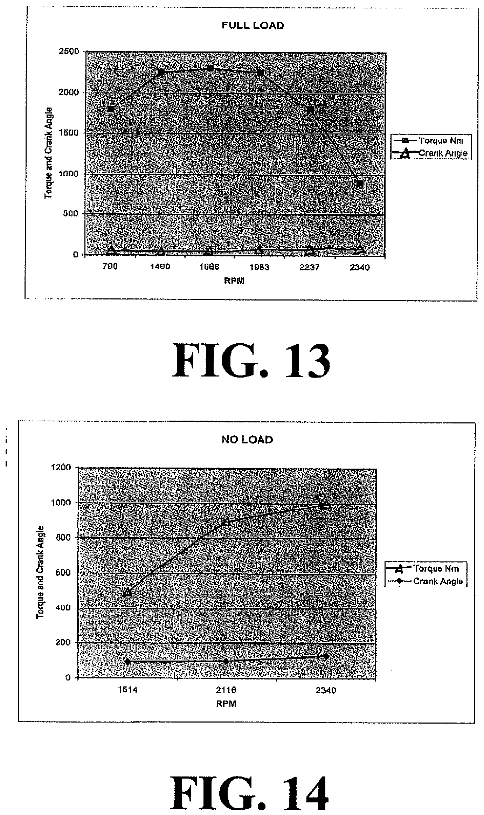

FIG. 13 is a chart illustrating a torque and crank angle of an exemplary internal combustion engine with respect to a given rotational speed, the internal combustion engine under a full load.

FIG. 14 is a chart illustrating a torque and crank angle of an exemplary internal combustion engine with respect to a given rotational speed, the engine under no load.

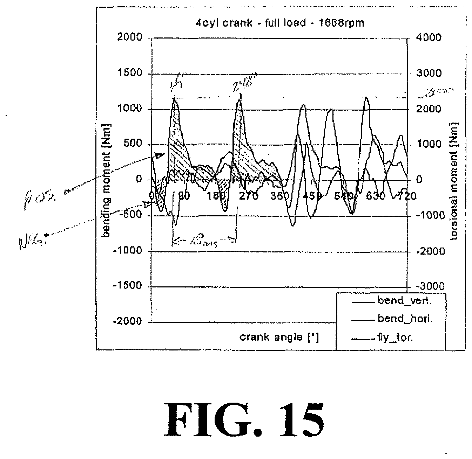

FIG. 15 is a chart illustrating a flywheel torque of an exemplary four cylinder engine with respect to a given crank angle, the engine under a full load.

The torque spike cancellation device 100, 200, 300, 400, 500, 600 provides a simple, low cost and efficient system which reduces the magnitude of a torque spike generated by the internal combustion engine 108, 208, 308, 408, 508 while reducing a torque output of the internal combustion engine 108, 208, 308, 408, 508 to closer to a mean output torque value for the internal combustion engine 108, 208, 308, 408, 508.

In accordance with the provisions of the patent statutes, the present invention has been described in what is considered to represent its preferred embodiments. However, it should be noted that the invention can be practiced otherwise than as specifically illustrated and described as defined in the appended claims.

**Claims**

1. A torque spike cancellation device (400) in driving engagement with a main shaft of a internal combustion engine (108) and in further driving engagement with an input shaft of a transmission, the torque spike cancellation device comprising:

a first member (114) in driving engagement with an output of the internal combustion engine (108);
a second member (116) in driving engagement with the first member (114); and

a third member (118) in driving engagement with the second member (116), wherein an angular deviation between the first member (114) and one of the second member (116) and the third member (118) causes a cyclical acceleration of the third member (118), the cyclical acceleration of the third member (118) adjusting a torque applied to the third member by the internal combustion engine (108), wherein the first member (114), the second member (116), and the third member form a first Cardan joint assembly (402),
**characterized in that** the torque spike cancellation device further comprises a planetary gear assembly in driving engagement with the third member and a second Cardan joint.

**2.** The torque spike cancellation device of claim 1, wherein the third member is a flywheel or a driven yoke (114) and/or wherein the third member (114) is disposed about the output of the internal combustion engine (108).

**3.** The torque spike cancellation device of one of the claims 1 and 2, wherein the cyclical acceleration of the third member (118) adjusts a torque applied to the third member (118) and the second Cardan joint assembly (404) by the internal combustion engine (108).

**4.** The torque spike cancellation device of claim 3, wherein the second Cardan joint assembly (404) is in driving engagement with the input shaft (110) of the transmission (112) through a plurality of gears, the plurality of gears adjusting a drive ratio between the second Cardan joint assembly (404) and the input shaft (110) of the transmission (112).

**5.** The torque spike cancellation device of one of the claims 1 to 4, the torque spike cancellation device further comprising:
an adjustment member (610) in driving engagement with the second member (116), wherein the first member (114), the second member (116), and the adjustment member (610) are at least partially disposed within the third member (118) and the angular deviation between the first member (114) and the second member (116) may be adjusted using the adjustment member (610), causing the cyclical acceleration of the third member (118).

**Patentansprüche**

**1.** Drehmomentspitzenbeseitigungsvorrichtung (400) in Antriebseingriff mit einer Hauptwelle eines Verbrennungsmotors (108) und ferner in Antriebseingriff mit einer Eingangswelle eines Getriebes, wobei die Drehmomentspitzenbeseitigungsvorrichtung Folgendes umfasst:

ein erstes Element (114) in Antriebseingriff mit einem Ausgang des Verbrennungsmotors (108);
ein zweites Element (116) in Antriebseingriff mit dem ersten Element (114); und ein drittes Element (118) in Antriebseingriff mit dem zweiten Element (116), wobei eine winkelförmige Abweichung zwischen dem ersten Element (114) und entweder dem zweiten Element (116) oder dem dritten Element (118) eine zyklische Beschleunigung des dritten Elements (118) bewirkt, wobei die zyklische Beschleunigung des dritten Elements (118) ein durch den Verbrennungsmotor (108) auf das dritte Element aufgebrachtes Drehmoment reguliert, wobei das erste Element (114), das zweite Element (116) und das dritte Element eine erste Kardangelenkanordnung (402) bilden, **dadurch gekennzeichnet, dass** die Drehmomentspitzenbeseitigungsvorrichtung ferner eine Planetenradanordnung in Antriebseingriff mit dem dritten Element und einem zweiten Kardangelenk umfasst.

**2.** Drehmomentspitzenbeseitigungsvorrichtung nach Anspruch 1, wobei das dritte Element ein Schwungrad oder ein angetriebenes Joch (114) ist und/oder wobei das dritte Element (114) um den Ausgang des Verbrennungsmotors (108) angeordnet ist.

**3.** Drehmomentspitzenbeseitigungsvorrichtung nach einem der Ansprüche 1 und 2, wobei die zyklische Beschleunigung des dritten Elements (118) ein durch den Verbrennungsmotor (108) auf das dritte Element (118) und die zweite Kardangelenkanordnung (404) aufgebrachtes Drehmoment reguliert.

**4.** Drehmomentspitzenbeseitigungsvorrichtung nach Anspruch 3, wobei die zweite Kardangelenkanordnung (404) über mehrere Ritzel in Antriebseingriff mit der Eingangswelle (110) des Getriebes (112) ist, wobei die mehreren Ritzel eine Antriebsübersetzung zwischen der zweiten Kardangelenkanordnung (404) und der Eingangswelle (110) des Getriebes (112) regulieren.

**5.** Drehmomentspitzenbeseitigungsvorrichtung nach einem der Ansprüche 1 bis 4, wobei die Drehmomentspitzenbeseitigungsvorrichtung ferner Folgendes umfasst:

ein Regulierungselement (610) in Antriebseingriff mit dem zweiten Element (116), wobei das erste Element (114), das zweite Element (116) und das Regulierungselement (610) mindestens teilweise innerhalb des dritten Elements (118) angeordnet sind und die winkelförmige Abweichung zwischen dem ersten Element (114) und dem zweiten Element (116) unter Verwendung des Regulierungselements (610) reguliert werden kann, was die zyklische Beschleunigung des dritten Elements (118) bewirkt.

## Revendications

1. Dispositif de suppression d'à-coups de couple (400) en engagement par entraînement avec un arbre principal d'un moteur à combustion interne (108) et en outre en engagement par entraînement avec un arbre d'entrée d'une transmission, le dispositif de suppression d'à-coups de couple comprenant :

   un premier élément (114) en engagement par entraînement avec une sortie du moteur à combustion interne (108) ;
   un deuxième élément (116) en engagement par entraînement avec le premier élément (114) ; et
   un troisième élément (118) en engagement par entraînement avec le deuxième élément (116), dans lequel une déviation angulaire entre le premier élément (114) et un élément pris parmi le deuxième élément (116) et le troisième élément (118) génère une accélération cyclique du troisième élément (118), l'accélération cyclique du troisième élément (118) réglant un couple qui est appliqué sur le troisième élément par le moteur à combustion interne (108), dans lequel le premier élément (114), le deuxième élément (116) et le troisième élément forment un premier assemblage de joint de cardan (402) ; **caractérisé en ce que** le dispositif de suppression d'à-coups de couple comprend en outre un assemblage d'engrenage(s) planétaire(s) en engagement par entraînement avec le troisième élément et un second assemblage de joint de cardan.

2. Dispositif de suppression d'à-coups de couple selon la revendication 1, dans lequel le troisième élément est un volant d'inertie ou une fourche entraînée (114) et/ou dans lequel le troisième élément (114) est disposé à proximité de la sortie du moteur à combustion interne (108).

3. Dispositif de suppression d'à-coups de couple selon l'une des revendications 1 et 2, dans lequel l'accélération cyclique du troisième élément (118) règle un couple qui est appliqué sur le troisième élément (118) et le second assemblage de joint de cardan (404) par le moteur à combustion interne (108).

4. Dispositif de suppression d'à-coups de couple selon la revendication 3, dans lequel le second assemblage de joint de cardan (404) est en engagement par entraînement avec l'arbre d'entrée (110) de la transmission (112) par l'intermédiaire d'une pluralité d'engrenages, les engrenages de la pluralité d'engrenages réglant un rapport d'entraînement entre le second assemblage de joint de cardan (404) et l'arbre d'entrée (110) de la transmission (112).

5. Dispositif de suppression d'à-coups de couple selon l'une des revendications 1 à 4, le dispositif de suppression d'à-coups de couple comprenant en outre : un élément de réglage (610) en engagement par entraînement avec le deuxième élément (116), dans lequel le premier élément (114), le deuxième élément (116) et l'élément de réglage (610) sont au moins partiellement disposés à l'intérieur du troisième élément (118) et la déviation angulaire entre le premier élément (114) et le deuxième élément (116) peut être réglée en utilisant l'élément de réglage (610), ce qui génère l'accélération cyclique du troisième élément (118).

**FIG. 1**

**FIG. 2
(PRIOR ART)**

**FIG. 3**

**FIG. 4**

# FIG. 5

# FIG. 6

# FIG. 7

# FIG. 8

FIG. 9

FIG. 10

**FIG. 11**

**FIG. 12**

**FULL LOAD**

**FIG. 13**

**NO LOAD**

**FIG. 14**

# FIG. 15

**EP 2 778 467 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61787319

- DE 10122541 A1